# EUROPÄISCHE PATENTANMELDUNG

(11) **EP 1 584 460 A1**
(43) Veröffentlichungstag der Anmeldung: **12.10.2005**
(21) Anmeldenummer: 05450033.5
(22) Anmeldetag: 17.02.2005
(51) Int. Cl.: B32B 1/08, F16L 9/12, B32B 27/20, B32B 7/02, F16L 59/14

(54) **Kunststoffrohr bzw. Rohrformstück**

(30) Priorität: 15.03.2004 AT 1942004 U
(71) Anmelder: Poloplast GmbH & Co. KG, 4060 Leonding (AT)
(72) Erfinder: Borth, Rainer, Ing., 4490 St. Florian (AT)
(74) Vertreter: Beer, Manfred

(57) **Zusammenfassung**

Ein Rohr und Rohrformstück, die für Abwasserrohrleitungen bestimmt sind, besitzen wenigstens in den für eine Lärmentwicklung kritischen Bereichen einen dreischichtigen Aufbau bestehend aus einer inneren Schichte (Mediumrohr), einer mittleren Schichte (Zwischenschichte) und einer äußeren Schichte (Mantelrohr). Durch Erhöhung des Volumens entsprechende unterschiedliche Ausgestaltung der drei Schichten des erfindungsgemäßen Rohres und Rohrformstückes kann der nach außen abgegebene Lärmpegel verringert werden, so dass dessen schalldämmende Eigenschaften verbessert werden können.

## Beschreibung

Die Erfindung betrifft ein Kunststoffrohr bzw. Rohrformstück aus Kunststoff mit einem mehrschichtigen Rohrkörper mit verbesserter Schalldämmung.

Mehrschichtige Kunststoffrohre sind beispielsweise aus der AT 000 063 U2 oder der AT 391 008 B bekannt.

Das aus der AT 391 008 B bekannte, mehrschichtige Rohr besitzt drei Schichten und soll verbesserte Schalldämmeigenschaften aufweisen, wenn es als Abwasserrohr verwendet wird. Bei diesem bekannten Rohr besteht die innere Schichte aus einem thermoplastischen Kunststoff, wie Polyolefin oder einem Styrolpolymerisat mit einem E-Modul kleiner als 1500 N/mm². Die mittlere Schichte (Zwischenschichte) ist eine viskoelastische Kunststoffschichte, die mit einem Füllstoff gefüllt und gegebenenfalls geschäumt ist. Die äußere Schichte des aus der AT 391 008 B bekannten Rohres, das Mantelrohr, besteht aus steifem Kunststoff mit einem E-Modul von über 1500 N/mm². Der Kunststoff der äußeren Schichte ist in diesem Fall unverstärkt.

Das aus der AT 000 063 U bekannte Rohr ist ein Haus-Abflussrohr, das aus drei Schichten besteht. Dabei soll die mittlere Schichte die tragende Schichte sein und aus mit 25 bis 50 Gew.-% Füllstoffen gefülltem Polypropylen bestehen. Die äußere Schichte und die innere Schichte des Rohres, das aus der AT 000 063 U2 bekannt ist, sollen aus dem gleichen Kunststoff bestehen wie die mittlere Schichte, aber - anders als die mittlere Schichte - nicht gefüllt sein.

Aus der EP 0 254 375 B ist ein Schallschutz-Rohrformteil, der als Abwasserrohr Verwendung finden soll, bekannt. Die Rohr- oder Formteilwand besteht dabei aus einer einzigen Schichte aus hochgefülltem Polyolefin, wobei ein Flächengewicht von mehr als 8 kg/m² und eine Dichte von zwischen 1,6 und 2,7 g/cm³ angestrebt werden. Der aus der EP 0 254 375 B bekannte Rohrformteil ist einschichtig aufgebaut.

In der JP 06-174175 A ist ein zweilagiges Rohr (Abfallrohr) beschrieben, das aus einer inneren Schale und einer äußere Schale besteht, wobei die äußere Schale aus Vinylchloridharz enthaltend Bariumsulfat und die innere Schale aus Vinylchloridharz bestehen soll. Die Innenschale kann aus geschäumten Polystyrol bestehen. Bei der äußeren Schale des bekannten Rohres handelt es sich um eine schallschützende Umhüllung eines Abfallrohres, die in Form einer Mantelschale (aus zwei Lagen) nachträglich um ein Abfallrohr herum angebracht werden soll.

Die JP 06-174178 A betrifft eine Schale für Rohrformstücke (Krümmer), die denselben Aufbau besitzt wie die in der JP 06-174175 A beschriebenen Schale des Abfallrohres. Auch hier soll die Schale erst nachträglich angebracht werden und bildet mit dem Rohrformstück selbst keine Einheit.

In der KR 10-2003-0071436 A ist eine schallgeschützte Rohrkonstruktion (Polypropylenrohr) beschrieben, dessen Zwischenschicht aus einer Mischung eines Polypropylenkunststoffs mit Kalziumkarbonat bestehen soll. Die innere Schicht besteht aus Poylpropylen mit glatter Innenfläche und die Außenschicht besteht ebenfalls aus Poylpropylen und soll schlagfest ausgebildet sein.

Die DE 298 01 336 U1 zeigt ein schweißbares Einschichtrohr, das gute schalldämmende, mechanische und thermische, sowie chemische Eigenschaften haben soll. Als Werkstoff für dieses bekannte Rohr wird-Polyethylen mit Bariumsulfatfüllung vorgeschlagen.

Der Erfindung liegt die Aufgabe zu Grunde, die Schalldämmung bekannter Abwasserrohre oder in diesem Bereich eingesetzter Rohrformteile zu verbessern.

Gelöst wird diese Aufgabe mit einem Rohr bzw. Rohrformstück, das die Merkmale des unabhängigen Anspruches 1 aufweist.

Bevorzugte und vorteilhafte Ausgestaltungen des erfindungsgemäßen Rohres bzw. Rohrformstückes sind Gegenstand der Unteransprüche.

Die erfindungsgemäßen Rohre können Rohre mit angeformten Muffen sein. Unter Rohrformstücken sind im vorliegenden Zusammenhang beispielsweise bei der Abwasserentsorgung in Gebäuden verwendete Formstücke zum Herstellen von Abwasseranlagen zu verstehen. Solche Rohrformstücke sind beispielsweise Abzweigstücke, Verbindungsstücke, Umlenkbögen und ähnliches und können ebenfalls mit angeformten Muffen ausgestattet sein.

Das Kunststoffrohr und das Rohrformstück der Erfindung besteht wenigstens abschnittsweise aus einer Innenschichte (Mediumrohr), aus mindestens einer Zwischenschichte (Mittelschichte) und aus einer oder mehreren Außenschichten. Die einzelnen Schichten unterscheiden sich voneinander wenigstens im spezifischen Gewicht (Dichte) oder im Elastizitätsmodul (Biegesteifigkeit) oder in der Schwingungsdämpfung (elastoplastisches Verhalten).

Als Werkstoffe für die Schichten der erfindungsgemäßen Kunststoffrohre bzw. Rohrformstücke kommen grundsätzlich alle thermoplastischen Kunststoffe in Frage.

Insbesondere in Betracht gezogen sind Polypropylene (PP) in Form von Homopolymeren oder Copolymeren, wie ataktisches Polypropylen. In Betracht gezogen sind auch andere Polyolefine wie Polyethylen (PE), Polybuten (PB) und Polyisobutylen (PIB), oder Ethylen-Propylen-Terpolymere (EPDM), Ethylenvinylacetat (EVA), sowie AcrylnitrilButadien-Styrolcopolymere (ABS), Styrol-Acrylnitril (SAN), Polyvinylchlorid hart oder weichgemacht, Polyamide (PA), Polycarbonate (PC) oder Polyurethane (PU).

Auch Mischungen verschiedener thermoplastischer Kunststoffe, z.B. der oben genannten Kunststoffe, sogenannte Polymerblends, sind in Betracht gezogen.

Der Aufbau der mittleren Schichte(n) und der inneren Schichte (Mediumrohr) ist für das erfindungsgemäße Rohrformstück nicht in erster Linie kritisch. In der Regel sind diese Schichten ebenfalls aus einem thermoplastischen Kunststoff, z.B. aus einem der oben genannten Kunststoffe aufgebaut. Insbesondere die mittlere Schichte kann mit einem Mineralstoff gefüllt sein. In einer Ausführungsform kann (können) die mittlere Schichte(n) und die äußere Schichte (Mantelrohr) nicht nur aus unterschiedlichen Kunststoffen oder Blends bestehen, sondern auch mit unterschiedlichen mineralischen Stoffen gefüllt sein.

Besonders bevorzugt für die Außenschichte sind Polypropylene oder PP-Blends, die sich als Matrixwerkstoff für hochgefüllte Compounds eignen. Für die Compoundwerkstoffe der Außenschichte kommen im Rahmen der Erfindung beispielsweise folgende Füllstoffe in Betracht: Talkum, Kreide, Glimmer, Basalt, Wollastonit und Bariumsulfat (Baryt). Weiters als Füllstoff in Betracht gezogen sind Magnesit und/oder Eisenpulver.

Auch Mischungen verschiedener Füllstoffe, z.B. der oben genannten Stoffe, sind in Betracht gezogen.

Ebenfalls in Betracht gezogen sind die genannten Füllstoffe in feiner Verteilung und mit sehr kleinen Korngrößen ("Nanoteilchen").

Dem Compoundwerkstoff für die Außenschichte des erfindungsgemäßen Rohres bzw. Formstückes kann auch ein Umlaufmaterial, z.B. ein Regenerat oder Recyclat, beigefügt werden. Unter den Begriffen Regenerat und Recyclat wird im vorliegenden Zusammenhang folgendes verstanden: Ein Regenerat ist ein Umlaufmaterial, das durch Produktionsausschuss entsteht und ohne weiteren Gebrauch in den Produktionsfluss wieder eingeleitet wird. Ein Recyclat ist ein aus einem gebrauchten Produkt rückgewonnenes Material, das zu einem anderen oder auch dem gleichen Produkt verarbeitet wird.

Durch die erfindungsgemäß vorgeschlagene Maßnahme, in der Außenschichte (Mantelschichte) einen thermoplastischen Kunststoff einzusetzen, der mit mineralischen Stoffen gefüllt ist, ergibt sich in Verbindung mit den weiteren Schichten der Rohrwand oder der Wand des Rohrformstückes eine wesentliche Verringerung der Schallpegelwerte des Rohrsystems und eine hohe Wirtschaftlichkeit der verwendeten Materialkombination. Dies gilt sowohl für die eigentlichen Kunststoffrohre als auch für die Rohrformstücke.

Das Ausmaß der Füllung in der äußeren Schichte kann 5 bis 85 Gew.-% betragen.

Bei dem erfindungsgemäßen Rohr und bei dem erfindungsgemäßen Rohrformstück kann in allen Ausführungsformen außerhalb der äußeren Schichte noch eine weitere Schichte aus einem beispielsweise chemisch beständigen, witterungs- und kratzfesten Kunststoff aufgebracht sein. Diese zusätzliche Schichte kann auch aus flammhemmenden Stoffen bestehen.

Ein Vorteil des erfindungsgemäßen Rohres bzw. Rohrformstückes besteht auch darin, dass die innere Schichte (Mediumrohr) des erfindungsgemäßen Kunststoffrohres bzw. Rohrformstückes aus chemisch beständigem Kunststoff, der einem Korrosionsangriff (chemische Korrosion) besser standhält als die Zwischenschichte(n), aufgebaut sein kann.

Die erfindungsgemäß für die äußere Schichte vorgeschlagenen Werkstoffe bieten in Kombination mit bevorzugten Werkstoffen der inneren Schichte(n) und der mittleren Schichte(n) einen oder mehrere der nachstehend genannten Vorteile:
1) Die Wirkung der Schwingungsdämpfung der (den) elastoplastischen (mittleren) Schichte(n) wird im Verbund mit mineralischen Stoffen in der äußeren Schichte deutlich verbessert. Im Frequenzspektrum von 500-4000 Hz wird eine wesentlich verringerte Schallabstrahlung gegenüber Außenschichten mit ungefüllten polymeren Werkstoffen gemessen. Die optimale Anreicherung der polyolefinen Werkstoffe mit mineralischen Stoffen liegt bei 30 bis 60 Gew.-%, je nach Polymermatrix, mineralischem Stofftyp, Korngröße, Mischungsverhältnis und spez. Gewicht.
   Durch Aufheben von Biegeresonanzen bei Schwingungen der Rohrwand und durch Einflussnahme auf die Lage der Grenzfrequenz der Biegewellen des Gesamtrohres wird eine maßgebliche Verringerung der Schallabstrahlung erreicht.
2) Die Differenz der Biegesteifigkeit der angrenzenden Schichten ist - wie die Dämpfungseigenschaften der Werkstoffe selbst - ebenfalls ein Maß für die Dämpfung von Schwingungen. Werden polymere Werkstoffe mit mineralischen Stoffen angereichert, so steigt der E-Modul. Neben der Wahl der Wanddicke kann durch Beigabe mineralischer Stoffe in der Aussenschichte der E-Modul erhöht werden. Damit kann auch die Biegesteifigkeit der Außenschichte in Relation zur Steifigkeit der Zwischenschichte(n) eingestellt werden.
3) Je nach Füllstofftyp und Menge in der Mittel- und Außenschichte erhöht sich das Flächengewicht des Rohres. Damit wird für die Schalldämmung des Rohres in den erfinderischen Ausführungsformen eine Verbesserung im Frequenzbereich von 500 - 4000 Hz erreicht.

Bei dem Rohr der AT 391 008 B kann die Schichtdicke der viskoelastischen (elastoplastischen) mittleren Schichte kann 0,1 bis 1 mm betragen. Dies sind bei einer praxisbezogenen Gesamtwanddicke von 5 mm <20 %. Es hat sich als vorteilhaft erwiesen, wenn die Dicke der mittleren Schichte(n) 25 bis 60 % der Gesamtwandstärke des Rohres oder Formstückes der Erfindung beträgt, da damit die Schwingungsdämpfung verbessert wird.

Mehrschichtige Rohr-Formstücke können im sogenannten Coinjektionsverfahren hergestellt werden. Da dieses Verfahren aufwändig und teuer ist, können herkömmliche Formstücke mit einer relativ dünnen Wand (z.B. einschichtige PP-Rohre und Formstücke) in einem zweiten Arbeitsgang vornehmlich in lärmabstrahlenden Zonen mit einem Werkstoff beschichtet oder umspritzt werden (Zwei-Componenten-Spritzguss), der wie die mittlere Schichte des erfindungsgemäßen Rohres eine ebenfalls elastoplastische Konsistenz aufweist und zugleich ein spez. Gewicht von > 1,5 g/cm³, im Idealfall um die 2,5 g/cm³ hat. Das Formstück besteht in diesem Fall in den schallabstrahlenden Zonen aus einem zwei-schichtigen Verbund.

Die Ausführungsbeispiele zeigen, wie die Werkstoffkombinationen in der Rohr- oder Formstückwand verteilt werden können und die Eigenschaften der Werkstoffe (Compounds).

**Tabelle 1:**

| Ausführungsbeispiele für ein Rohr oder Formstück mit einem Außendurchmesser von 110 mm (Dreischichtaufbau) | | | | | | | | | |
|---|---|---|---|---|---|---|---|---|---|
| Beispiel. Nr. | Werkstoff Mediu m-Rohr | M mm | Werkstoff zwischen 1 Typ EPS Compound | Werkstoff zwischen 2 Typ EPL Compound | 1+2 mm | Werkstoff außen 1 Typ HES Compound | Werkstoff außen 2 Compound | 1+2 mm | Ges mm |
| 1 | PP-B | 0,5 | EPDM/dPP +60 BS | EPDM/PIB | 2,0 | PP-B +20T+40BS +A | PET + A | 2,5 | 5,0 |
| 2 | PP-B | 0,5 | EPDM +80 BS | EPDM/appar atus | 2,5 | PP-B +30BS+30T +A | PET/PC +A | 1,8 | 4,8 |
| 3 | PP-B | 0,5 | EPDM +80 BS | --- | 2,0 | PP-B+60BS +A | --- | 2,5 | 5,0 |
| 4 | PP-B | 0,5 | --- | EPDM+40BS +5K+TM | 2,0 | PP-B+60BS +A | PP-H +30 W +A | 2,5 | 5,0 |

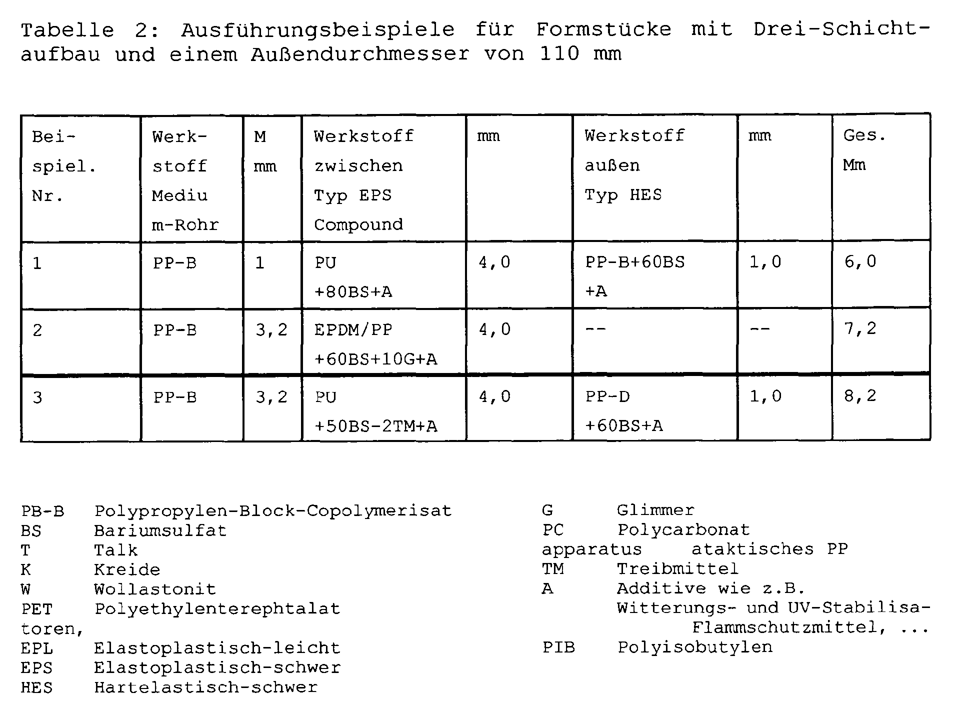

**Tabelle 3:**

| Eigenschaften der Werkstoffe | | | | |
|---|---|---|---|---|
| Typ | Eigenschaft | Spez. Gew. G/cm³ | E-Modul N/mm² | Dämpfungsmaß tan |
| EPL | Visko-elastoplastisch weich-leicht | 0,5-1,2 | 5-500 | 0,1-0,5 |
| EPS | Visko-elastoplastisch weich-schwer | 1,2-2,7 | 5-500 | 0,1-0,5 |
| HES | Elastisch hart-schwer | 1,5-2,7 | 1500-5000 | 0,01-0,02 |

Wie Beispiel 4 der Tabelle 1 und Beispiel 3 der Tabelle 2 zeigen, können EPS-Compounds mit Treibmittel geschlossenzellig geschäumt werden, wodurch ein elastoplastisch verformbarer, leichter Werkstoff vom Typ EPL entsteht. Eine geschäumte Zwischenschichte ist für die Schalldämmung von Rohren und Formstücken durchaus wirkungsvoll, wenn die Massen der Deckschichten darauf abgestimmt sind.

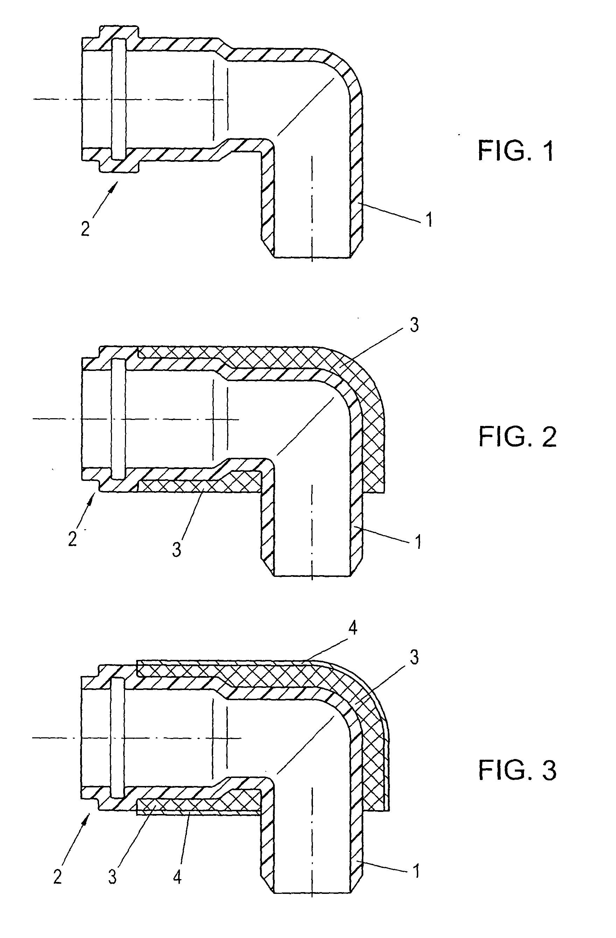

Für das erfindungsgemäße Rohr ist es ebensowenig wie für das erfindungsgemäße Rohrformstück wesentlich, dass sich die mittlere und die äußere Schichte über die gesamte Außenfläche des Rohres bzw. Rohrformstückes erstrecken. Es genügt nämlich, wenn die mittlere und die äußere Schichte auf der inneren Schichte (Mediumrohr) nur in dem Bereich oder in den Bereichen angeordnet sind, die für eine Lärmentwicklung kritisch sind. Dies gilt beispielsweise für Rohrformstücke, die 90°-Bogen sind und für T-Abzweigstücke, wie dies nachstehend an Hand der Figuren 1 bis 6 erläutert ist.

Zusätzlich ist es möglich, wie bereits oben erwähnt, auf ein zunächst lediglich durch das Mediumrohr gebildetes Rohr bzw. Rohrformstück die mittlere Schichte (Zwischenschichte) und dann die äußere Schichte (Mantelrohr) durch Umspritzen der inneren Schichte (Mediumrohr) an den Bereichen anzubringen, in denen die mittlere und die äußere Schichte benötigt werden. Es versteht sich, dass auch in Betracht gezogen ist, Rohre und Rohrformstücke über ihre gesamte Erstreckung mit einer Zwischenschichte und einer äußeren Schichte zu versehen.

In Fig. 1 ist ein 90°-Bogen als Rohrformstück gezeigt, der zunächst nur aus dem Mediumrohr 1 besteht. An einem Ende des Mediumrohres ist eine Muffe 2 mit beispielsweise üblicher Formgebung angeformt. Um auf dem Mediumrohr 1 des Rohrformstückes gemäß Fig. 1 eine Zwischenschichte anzubringen, wird das Mediumrohr 1 des Rohrformstückes in eine Form eingesetzt, in der zwischen der Innenwand des Formhohlraumes und der Außenfläche des Mediumrohres 1 dort Spiel frei ist, wo eine Zwischenschichte 3 anzubringen ist. So kann das Mediumrohr 1 mit einer Zwischenschichte 3 umspritzt werden, die sich im gezeigten Ausführungsbeispiel (Fig. 2) im Bereich der Muffe und des Bogenteils des Rohrformstückes erstreckt. Als nächster Schritt wird ebenfalls in einer Spritzgussform, dort wo benötigt, auf die Zwischenschichte 3 eine Außenschichte 4 durch Umspritzen in einer Form angebracht (Fig. 3), so wird schließlich ein erfindungsgemäßes Rohrformstück in Form eines 90°-Bogens mit einer inneren Schichte 1, die das Mediumrohr bildet, einer mittleren Schichte 3, welche die Zwischenschichte bildet und einer äußeren Schichte 4, welche das Mantelrohr bildet, erhalten.

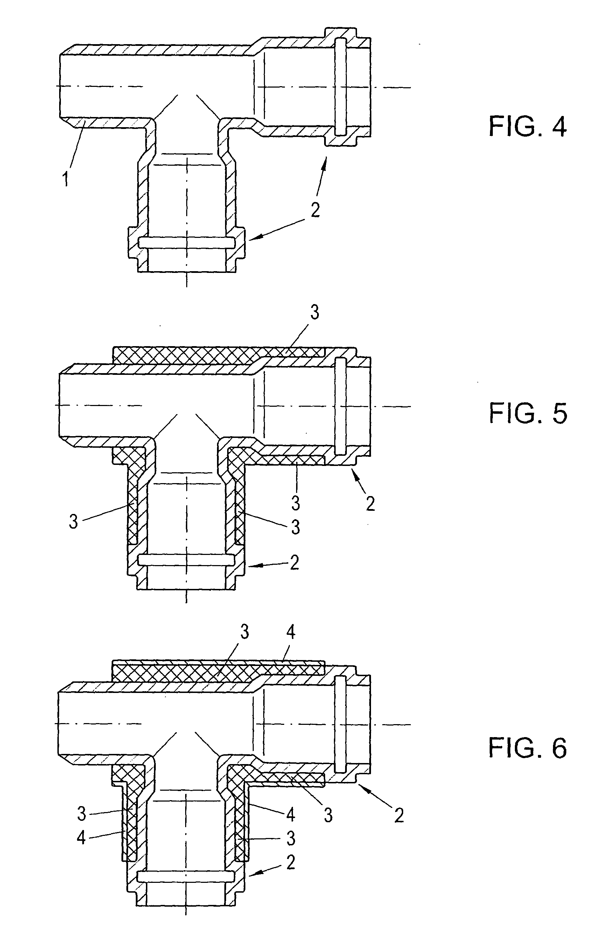

Sinngemäßes ist in der Abfolge der Figuren 4 bis 6 ein T-Abzweigstück gezeigt.

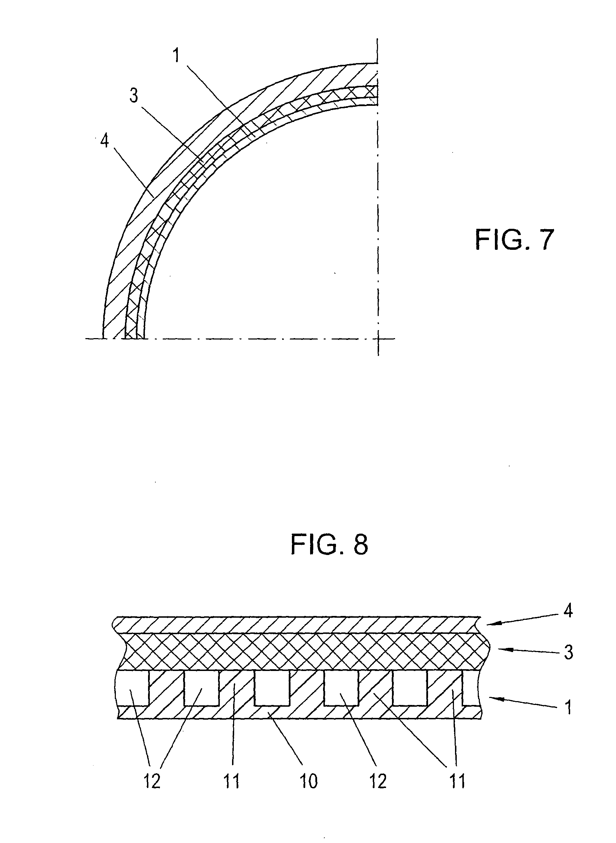

In Fig. 7 ist ein Detail eines erfindungsgemäßen Rohres oder Rohrformstückes mit typischer Aufteilung seiner Schichten 1, 3 und 4. Fig. 8 zeigt eine Einzelheit einer Ausführungsform eines erfindungsgemäßen Rohres oder Rohrformstückes mit hohl ausgebildeter innerer Schichte 1 im Schnitt.

Im Rahmen der Erfindung kann in einer Ausführungsform vorgesehen sein, dass die innere Schichte 1 (Mediumrohr oder Innenrohr) erfindungsgemäßer Rohre oder Rohrformstücke, wenigstens teilweise hohl ausgebildet ist. Dies kann in einer Ausführungsform (vgl. Fig. 8) so verwirklicht sein, dass die innere Schichte 1 als Hohlkammerprofil mit glatter (geschlossener) zum Inneren des Rohres oder Rohrformstückes weisender Wand 10 (Innenwand) und mit nach außen, zur mittleren Schichte 3 hin weisenden Stegen 11, zwischen denen hohle Kammern 12 gebildet sind, ausgebildet ist.

Zusammenfassend kann ein Ausführungsbeispiel der Erfindung wie folgt dargestellt werden:

Ein Rohr und Rohrformstück, die für Abwasserrohrleitungen bestimmt sind, besitzen wenigstens in den für eine Lärmentwicklung kritischen Bereichen einen dreischichtigen Aufbau bestehend aus einer inneren Schichte (Mediumrohr), einer mittleren Schichte (Zwischenschichte) und einer äußeren Schichte (Mantelrohr). Durch entsprechende unterschiedliche Ausgestaltung der drei Schichten des erfindungsgemäßen Rohres und Rohrformstückes kann der nach außen abgegebene Lärmpegel verringert werden, so dass dessen schalldämmende Eigenschaften verbessert werden können.

## Patentansprüche

1. Rohr- und Rohrformstück mit einem mehrschichtigen Rohrformkörper, insbesondere aus wenigstens einem Kunststoff, mit wenigstens einer äußeren Schichte (4, Mantelrohr), einer mittleren Schichte (3, Zwischenschichte) und einer inneren Schichte (1, Mediumrohr), **dadurch gekennzeichnet, dass** die äußere Schichte (4) aus mit Mineralstoff gefülltem Kunststoff besteht.

2. Rohr nach Anspruch 1, **dadurch gekennzeichnet, dass** der E-Modul des Werkstoffes der äußeren Schichte (4) größer ist als der E-Modul des Werkstoffes der mittleren Schichte (3).

3. Rohr nach Anspruch 2, **dadurch gekennzeichnet, dass** die Differenz zwischen den E-Modulen des Werkstoffes der Zwischenschichte(n) und des Werkstoffes der äußeren Schichte (4) mindestens 1000 N/mm² beträgt.

4. Rohr nach Anspruch 2, **dadurch gekennzeichnet, dass** der E-Modul des Werkstoffes der äußeren Schichte (4) wenigstens dreimal so groß ist wie der E-Modul des Werkstoffes der Mittelschichte.

5. Rohr nach einem der Ansprüche 1 bis 4, **dadurch gekennzeichnet**, das der Füllstoffanteil in der äußeren Schichte (4) zwischen 5 und 85 Gew.-% beträgt.

6. Rohr nach einem der Ansprüche 1 bis 5, **dadurch gekennzeichnet, dass** der Mineralstoff mit dem die äußere Schichte (4) gefüllt ist, ausgewählt ist aus der Gruppe bestehend aus Talkum, Kreide, Bariumsulfat, Wollastonit, Glimmer und Basalt, oder einer Mischung aus wenigstens zwei der vorgenannten Mineralstoffe.

7. Rohr nach einem der Ansprüche 1 bis 5, **dadurch gekennzeichnet, dass** der Mineralstoff mit dem die äußere Schichte (4) gefüllt ist, ausgewählt ist aus der Gruppe bestehend aus Magnesit und Eisenpulver.

8. Rohr nach einem der Ansprüche 1 bis 7, **dadurch gekennzeichnet, dass** der Mineralstoff in feiner Verteilung mit kleiner Korngröße, insbesondere Korngröße im Nanobereich vorliegt.

9. Rohr nach einem der Ansprüche 1 bis 8, **dadurch gekennzeichnet, dass** die äußere Schichte aus einem mit Mineralstoff gefüllten, thermoplastischen Kunststoff besteht.

10. Rohr nach einem der Ansprüche 1 bis 9, **dadurch gekennzeichnet, dass** die äußere Schichte (4) aus mit Mineralstoff gefülltem Polyolefin, insbesondere Polypropylen oder Polyethylen besteht.

11. Rohr nach einem der Ansprüche 1 bis 10, **dadurch gekennzeichnet, dass** die innere Schichte (1) aus einem füllstofffreien, thermoplastischen Kunststoff besteht.

12. Rohr nach einem der Ansprüche 1 bis 11, **dadurch gekennzeichnet, dass** die mittlere Schichte (3) aus einem mit Mineralstoff gefüllten, thermoplastischen Kunststoff besteht.

13. Rohr nach einem der Ansprüche 1 bis 12, **dadurch gekennzeichnet, dass** die mittlere Schichte (3) aus einem viskoelastischen/elastoplastischen Kunststoff mit einem E-Modul von 50 bis 500 N/mm², vorzugsweise 200 N/mm² besteht.

14. Rohr nach einem der Ansprüche 1 bis 13, **dadurch gekennzeichnet, dass** die äußere Schichte (4) im Verhältnis von Flächengewicht (kg/m²) zu Nennweite von mindestens 2,7 steht.

15. Rohr nach einem der Ansprüche 1 bis 14, **dadurch gekennzeichnet, dass** die äußere Schichte eine Dichte von 1,1-2,7 g/cm³ besitzt.

16. Rohr nach einem der Ansprüche 1 bis 15, **dadurch gekennzeichnet, dass** mehrere mittlere Schichten (3) mit unterschiedlicher Dichte vorgesehen sind.

17. Rohr nach einem Ansprüche 1 bis 16, **dadurch gekennzeichnet, dass** mehrere mittlere Schichten (3) mit unterschiedlichem E-Modul vorgesehen sind.

18. Rohr nach einem der Ansprüche 1 bis 17, **dadurch gekennzeichnet, dass** auf der äußeren Schichte (4) eine Schutzschichte angebracht ist.

19. Rohr nach Anspruch 18, **dadurch gekennzeichnet, dass** die Schutzschichte aus thermoplastischem Kunststoff besteht.

20. Rohr nach Anspruch 19, **dadurch gekennzeichnet, dass** die Schutzschichte aus einer Mischung thermoplastischer Kunststoff besteht.

21. Rohr nach Anspruch 18, **dadurch gekennzeichnet, dass** die Schutzschichte metallisch ist.

22. Rohr nach einem der Ansprüche 18 bis 21, **dadurch gekennzeichnet, dass** die Schutzschichte flammhemmend ist.

23. Rohr nach einem der Ansprüche 1 bis 22, **dadurch gekennzeichnet, dass** die innere Schichte (1, Mediumrohr) wenigstens bereichsweise hohl ausgebildet ist.

24. Rohr nach nach Anspruch 23, **dadurch gekennzeichnet, dass** die innere Schichte (1) aus einem Hohlkammerprofil besteht.

25. Rohr nach Anspruch 24, **dadurch gekennzeichnet, dass** die Stege (11) zwischen den Kammern (12) der inneren Schichte (3) nach außen weisend ausgerichtet sind.
